# EUROPEAN PATENT SPECIFICATION

(11) **EP 0 586 954 B1**
(45) Date of publication and mention of the grant of the patent: **03.11.2004**
(21) Application number: 93113369.8
(22) Date of filing: 20.08.1993
(51) Int. Cl.: H04M 3/50, H04L 12/58

(54) **Techniques for producing PC displays and printed transcripts from voicemail messages**
Techniken zur Erzeugung von Personalcomputeranzeigen und gedruckten Transkripten aus Sprachpostnachrichten
Techniques pour produire des affichages d'ordinateur personnel et des transcriptions imprimées à partir de messages d'audio messagerie

(30) Priority: 11.09.1992 US 943797
(43) Date of publication of application: 16.03.1994
(73) Proprietor: Siemens Information & Communication Networks, Inc., San Jose, CA 95110 (US)
(72) Inventor: Iglehart, David, Austin, TX 78704 (US); Ford, Gordon D., Round Rock TX 78681 (US); Lester, Leland, Austin TX 78748 (US)
(74) Representative: Berg, Peter, Dipl.-Ing.

(56) References cited:
- EP-A- 0 378 694
- WO-A-87/07801
- AT & T TECHNOLOGY, vol.1, no.1, 1986, SHORT HILLS, NEW JERSEY US pages 26 - 35 K.M.HUBER ET AL 'GETTING THE MESSAGE WITH UMS'

## Description

### Field of the Invention

The present invention relates to Voice Mail (VM) systems, and, more particularly, to VM systems that are capable of producing displays at electronic display devices and printed transcripts from voicemail messages stored in the VM system.

### Background of the Invention

In recent years, communication systems have added many new services for consumer use. For example, Voice Mail systems are used to provide a voice-messaging service to a called party when the called party is unavailable. More particularly, leaving a voice message for a called party is in widespread use in the case of a non-completed telephone call (e.g., where the called party is either busy of otherwise unavailable). Voice messages are more efficient than telephone conversations where participation of the two parties to a call is not required to transfer simple information.

Voice messaging can be considered a replacement for either a human attendant who would otherwise be required to transcribe the message, or for a simple analog recording device (answering machine) that is connected to a called telephone. In this regard see, for example, the book "A Practical Guide to Voice Mail" by Martin F. Parker, Osborne McGraw-Hill, 1987, at pages 2-20 and 198-199; and the article entitled "Voice Mail and Competing Services" by Dr. I. Gitman in Computer Message Systems, edited by R. P. Uhlig, Proceedings of the IFIP TC-6 International Symposium on Computer Message Systems, Washington D.C., 5-7 September 1985, North Holland Publishing Co., at pages 405-410. As outlined in the article by Dr. I. Gitman, competing services are the regular mail, express mail, mailgrams, facsimile, or telephony (where Voice Mail is used when the called party is busy or not available). Major improvements in communication provided by Voice Mail come from new efficiencies in the flow of information between business people.

U.S. Patent No. 5,003,574 (D. Denq et al.), issued on March 26, 1991, discloses a voice capture system for use with a telephone switching system, and transcribing terminals for recording calling party generated information in predefined formats. The system digitizes and records messages from calling parties of the switching system, and records recognized terminology within the calling parties' voice messages as file records. The transcribing terminals are enabled to display the file record terminology in predefined formats, and the recorded messages are transmitted as audio messages via a telephone to operators. The operators then enter information contained within the recorded messages to complete the predefined format. The operator generated messages are subsequently recorded in the voice capture system.

U.S. Patent No. 4,853,952 (E. Jachmann et al.), issued on August 1, 1989, discloses a system for storing and forwarding voice signals, and for providing visual indications of stored voice signals. More particularly, for providing visual indications of stored voice signals, an operator station set is used in conjunction with a microprocessor as an operator controlled electronic message center. An operator enters a text message through a keyboard at the operator station set for subsequent transmission to one or more recipient station sets. The text message may include information such as a calling party's identification, a date of the message, and a time the message was received. The operator entered text message is received by an interface acting as a system controller, and the related digital text message signals are transmitted to the microprocessor. The microprocessor controls a display at the operator station set to provide a visual indication of receipt of the operator produced text message. The text message is stored in a Random Access Memory (RAM) associated with the microprocessor. The text message can be subsequently accessed and displayed on a display at a recipient's station set in response to predetermined control signals that are entered by the recipient at the recipient's station set.

The technical paper Huber, K.M. et al.: "Getting the Message with UMS" within AT&T Technology, pages 26 - 35, published by Short Hills, New Jersey, United States of America discloses a proprietary messaging architecture designed for the integration of multiple messaging services. This architecture allows retrieval of messages using any of several terminal types and gives access to different messaging services (e.g. e-mail, voice mail). Voice mail messages are identified by a scanline - a message header characterizing the sender, date and time - which can be converted into a textual or voice form. Using a textual based terminal, e.g. a computer, the message is characterized by a textual information and can be received by the addressee in the form of a spoken message.

International patent application No. WO-A-87 07801 (AT&T), issued on December, 17, 1987, discloses a communication system having unified messaging. Within this communication system voice mail messages are enveloped with a header that contains information relevant to the transmission of the message, e.g. origination and destination addresses, a time stamp and various other information. This information is either transferred to the addressee in the form of either text or voice information, respectively. The voicemail message itself remains in the initial voicemail format.

Various techniques are known in the prior art to provide message services to a person in a Voice Mail system. In a first technique, someone, often a second party such as a secretary, has to read information received through personal computer displays, files, or printed hard copy and physically record such information for distribution in voicemail messages. This technique is labor intensive, introduces the possibility of errors when the text is read and recorded vocally, and often compromises confidentiality when a second party does the recording.

In a second technique, when a person wants to distribute original information through both text and voice methods, that person has to generate the information in two different formats. This technique is labor intensive and introduces the possibility of errors when the text is recorded in two formats. Still further, a person who, creates information in electronic mail (E-Mail), or in hard copy, simply might not bother to duplicate it in Voice Mail and thus limits distribution.

Once the voicemail messages are stored for a recipient, that recipient may desire a printed version of the verbal voicemail message. For example, a customer records a detailed voicemail message for a recipient executive listing requirements for a large order, and requests notification about whether the recipient company can fulfill the order. Upon receipt of the voicemail message by the recipient executive, the executive determines that an accurate and confidential message needs to be sent to a subsidiary supply company that does not have the same Voice Mail system, and accurate hard copies need to be printed for the recipient company's and customer's record. Therefore, it is desirable to provide a voice messaging system which can convert received voice messages into accurate reproductions in any one of multiple media formats. Still further, it is desirable to permit a voicemail message recipient to employ a single, easy-to-use interface, requiring only one security system (e.g., a password), to review all stored voicemail messages and reproduce such voicemail messages in any desirable one of multiple predetermined text formats.

### Summary of the Invention

The present invention is directed to a technique for reproducing Voice Mail messages as normal verbal Voice Mail messages and/or at a variety of text output devices as, for example, (a) an electronic display device for displaying the voicemail message in the form of electronic mail (E-Mail), or personal computer displays and files, (b) facsimile devices for printing or sending the voicemail message, and (c) a printer for providing a printed hard copy of the voicemail message. Viewed from one aspect, the present invention is directed to a method of producing a voicemail message destined for a recipient and stored in a voicemail apparatus at any of voice and multiple different text outputs. In a first step, the voicemail apparatus is signaled with a predetermined feature access code for transmitting the voicemail message stored in the voicemail apparatus in a form of a digitized voice signal to a predetermined one of the multiple different text outputs. In a second step, the digitized voice signal of the voicemail message for the predetermined one of the multiple different text outputs indicated by the predetermined feature access code in the first step is converted into an ASCII text output message signal. In a third step, the text output message signal from the second step is transmitted to the predetermined one of the multiple different text outputs associated with the predetermined feature access code provided in the first step.

Viewed from another aspect, the present invention is directed to voicemail apparatus comprising a voicemail message system, voice-to-text converting means, and memory means. The voicemail message system is arranged to receive and store an input voicemail message signal in the form of a digitized voice message signal destined for a voicemail message recipient. The voice-to-text converting means converts the digitized voice message signal stored in the voicemail message system into an ASCII text output message signal. The memory means stores the ASCII text output message signal produced by the voice-to-text converting means with other converted text output message signals, and transmits a stored ASCII text output message signal to a predetermined one of multiple different text reproducing devices in response to receipt of a predetermined separate feature access code associated with that predetermined one of the multiple different text reproducing devices.

The invention will be better understood from the following more detailed description taken with the accompanying drawings and claims.

### Brief Description of the Drawings

FIG. 1 is a block diagram of apparatus for receiving and reproducing Voice Mail messages in the form of text and/or verbal outputs in accordance with the present invention;
FIG. 2 is a flow diagram of a sequence of steps for producing and storing ASCII text signal versions of digitized voicemail messages in accordance with the present invention; and
FIG. 3 is a flow diagram showing the transmission of voicemail messages from a file server to various text output reproducing devices in accordance with the present invention.

### Detailed Description

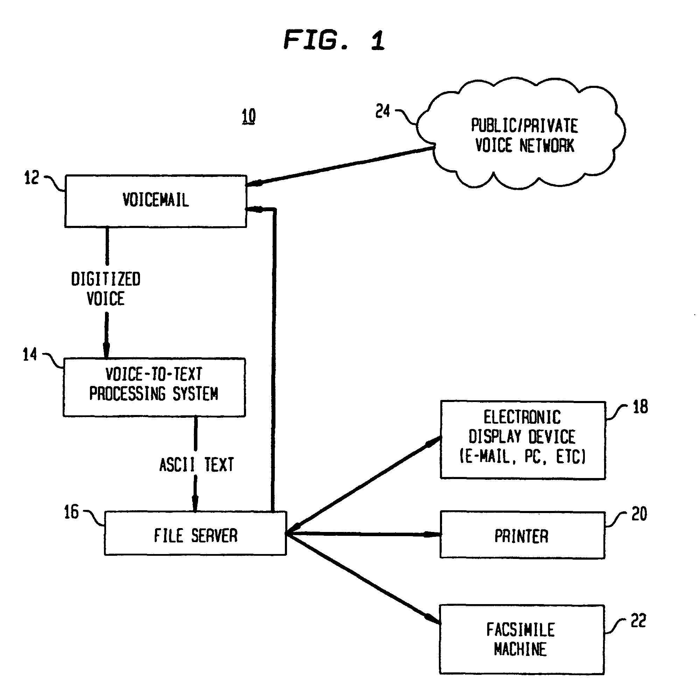

Referring now to FIG. 1, there is shown a block diagram of a personal messaging system 10 for producing personal computer displays and/or printed transcripts from voicemail messages in accordance with the present invention. The personal messaging system 10 comprises a Voicemail apparatus (Voicemail) 12, a voice-to-text processing system 14, a file server 16, an electronic display device (E-mail, PC, etc.) 18, a printer 20, a facsimile machine 22, and a public/private voice network 24. The Voicemail apparatus 12 receives voicemail messages from the public/private voice network 24 for called parties (recipients) who are either busy or currently not available to receive a call. The Voicemail apparatus 12 stores the voicemail message in a mailbox in a memory (not shown) within the Voicemail apparatus 12 which is associated with that voicemail message recipient. As is known in the art (but not illustrated herein), the Voicemail apparatus 12 generally provides a message notification indication at a communication device (e.g., a telephone or workstation) associated with the recipient of a voicemail message to apprise the recipient that a message is waiting.

Subsequently, a recipient of a voicemail message accesses the Voicemail apparatus 12 to listen to the stored voicemail message(s). After reviewing a voicemail message, the message recipient makes a decision of whether it is desirable to display the message at the electronic display device 18, print a hard copy of the voicemail message on the printer 20, and/or print or send the voicemail message at the facsimile machine 22. For example, a busy executive returns from lunch to find a voicemail message in which a customer gives a detailed list of requirements for a large order, and requests notification about whether the executive's company can fulfill the order. After listening to the voicemail message, the executive determines that it is necessary to send an accurate and confidential message (e.g., a facsimile message) to a subsidiary supply company that does not have the same Voicemail apparatus 12. To respond to the voicemail message, the executive needs to print accurate hard copies for his company, the subsidiary company, and the customer's records. In addition, the executive needs to print copies of the voicemail message for distribution at an executive staff meeting the next morning. In accordance with the present invention, the executive is able to accomplish all of the necessary transmissions and printings without having a secretary transcribe the voicemail message or by further human intervention.

The message recipient accesses the Voicemail apparatus 12 either locally at a communication device, or remotely via the public/private voice network by dialing the telephone number of the Voicemail apparatus 12. Upon providing the correct security code, the message recipient gains access to the voicemail messages stored in the Voicemail apparatus 12. After listening to each voicemail message, the recipient can direct a particular voicemail message to either one or all of the electronic display device 18, the printer 20, and the facsimile machine 22. This is accomplished by providing an appropriate feature access code and/or other keyed-in information. It is to be understood that the facsimile machine 22 can be a standard stand-apart machine or a facsimile card that is found in a personal computer.

When the appropriate feature access code is presented to the Voicemail apparatus 12 for printing and/or displaying a voicemail message, the Voicemail apparatus 12 transmits a digitized voice message signal that is stored in the recipient's mailbox to the Voice-To-Text processing system 14. The Voice-To-Text processing system 14 translates the digitized voice message signal into an ASCII text message signal. In accordance with the present invention, the converted ASCII text message signal is provided as a output for transmission to the file server 16. The file server 16 functions to continuously poll the Voice-To-Text processing system 14 for a new ASCII text message signal. When one or more ASCII text message signals are available from the Voice-To-Text processing system, the file server 16 accesses and stores each of the ASCII text message signals, and then outputs such stored ASCII text message signals in sequence to either one or all of the electronic display device 18, the printer 20, and the facsimile machine 22 dependent on the feature access code originally provided. Still further, the file server 16 outputs the received ASCII text message signal in a signal form which is appropriate for reception by the electronic display device 18, the printer 20, and the facsimile machine 22 to which the text message signal is being sent.

In an alternative embodiment of the present invention, the request for a display of a voicemail message is possible from an electronic display device 18. For example, the recipient of the voicemail message decides that the voicemail message should be seen by predetermined other users of the personal messaging system 10. After notifying the predetermined other users of the existence of the voicemail message they should view, and an identification code of the voicemail message, the predetermined other users can access the file server 16 via their electronic display device 18 and obtain the message to be displayed after providing the proper identification code.

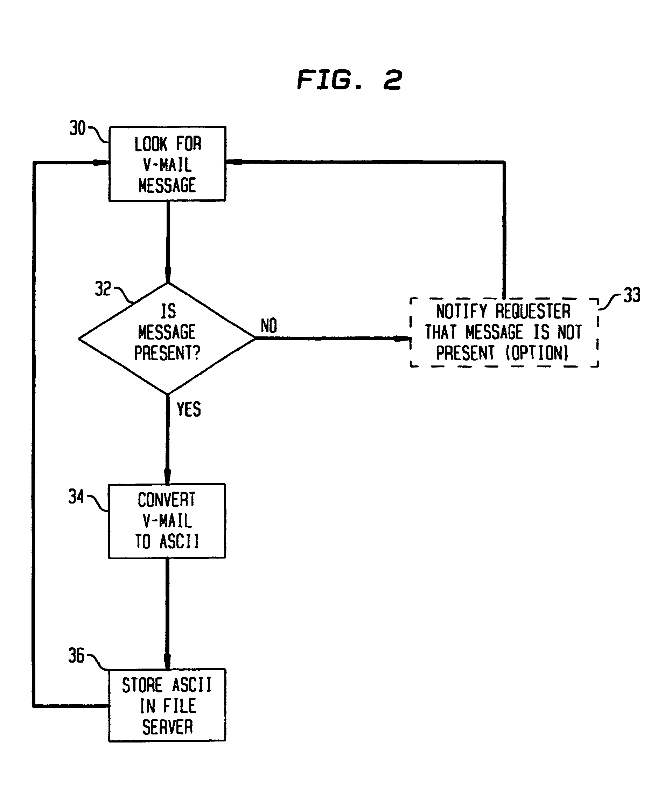

Referring now to FIG. 2, there is shown a flow diagram of an exemplary sequence of steps for producing ASCII text message signal versions of voicemail messages, and then storing the ASCII text message signals in the file server 16 (shown only in FIG. 1) in accordance with the present invention. In a first step shown in block 30, the Voicemail apparatus 12 (shown only in FIG. 1) looks for a voicemail (V-Mail) message after a request is made to have a voicemail message sent to the file server 16 for storage and subsequent processing. Such request can be initiated by the voicemail message recipient to display the message at the electronic display device 18 (shown only in FIG. 1), at the printer 20 (shown only in FIG. 1), or have such message sent to the facsimile machine 22 (shown only in FIG. 1). Still further, such request can be initiated by predetermined other users of the messaging system 10 of FIG. 1 via their electronic display devices 18 and the file server 16 by making a request to obtain an identified voicemail message from the voicemail apparatus 12. In a second step shown in block 32, the voicemail apparatus 12 determines if the voicemail message in question is present. If the voicemail message in question is not present, the sequence of steps returns via a "No" decision path from block 32 to the block 30 to look for another V-Mail message requests.

As an option, the sequence of steps proceed from the block 32 to the block 30 via the block 33 (shown as a dashed-lined rectangle) wherein a requester is notified that a message is not present or available, and that the requester should either make a correct identification for receiving the voicemail message or take some other action. If the voicemail message in question is present, the sequence of steps proceeds via a "Yes" decision path from block 32 to a block 34. In a third step shown in block 34, the voicemail message is converted from the digitized voice message signal into the ASCII text message signal by the Voice-To-Text processing system 14 (shown only in FIG. 1). In a fourth step shown in block 36, the ASCII text message signal from block 34 is stored in the file server 16. After storing the ASCII text message signal in the file server 16, the sequence of steps proceeds from the block 36 back to the block 30 to process the storage of another voicemail message from the voicemail apparatus 12 into the file server 16.

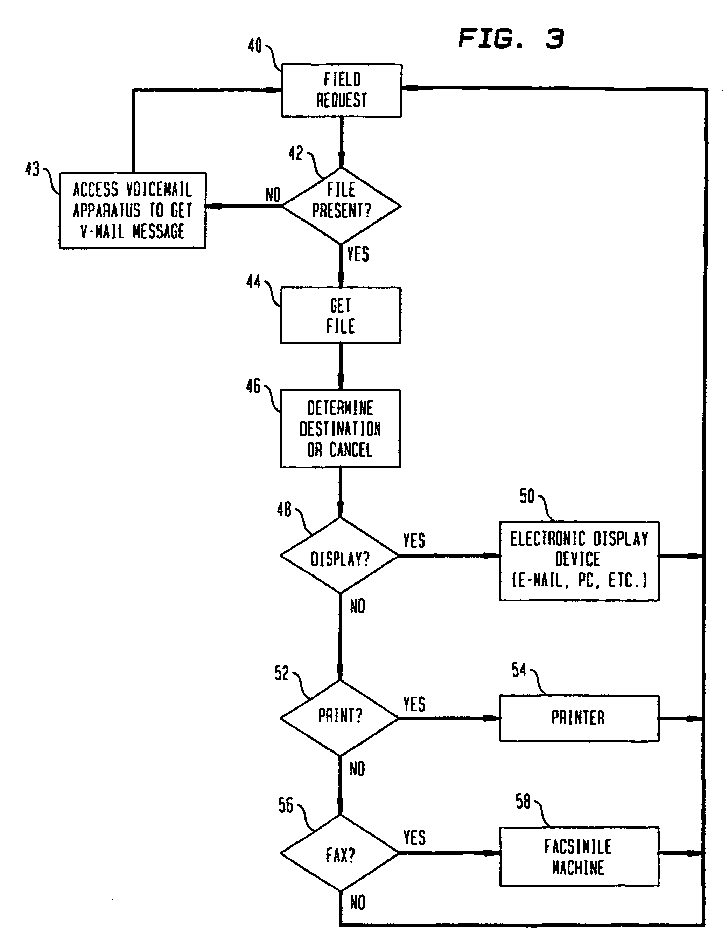

Referring now to FIG. 3, there is shown a flow diagram of an exemplary sequence of steps for the transmission of voicemail messages from the file server 16 to various text reproducing output devices in accordance with the present invention. In a first step shown in block 40, a request relating to an identified voicemail message (a file) stored in the voicemail apparatus 12 (shown only in FIG. 1) is received by the file server 16 (shown only in FIG. 1). Such request is initiated by the voicemail message recipient to send the voicemail message to the electronic display device 18 (shown only in FIG. 1), the printer 20 (shown only in FIG. 1), or to the facsimile machine 22 (shown only in FIG. 1). Alternatively, such request is initiated by a predetermined other user making a request for a display from an electronic display device 18 by providing a proper voicemail message identification. In a second step shown in a block 42, the file server 16 makes a determination of whether the identified voicemail message is presently stored in the file server 16 or not. When it is determined that the identified file is not presently stored in the file server 16, the sequence of steps proceeds via a "No" decision path from block 42 to a block 43. As shown in block 43, the file server 16 accesses the voicemail apparatus 12 to obtain the identified voicemail message and the sequence of steps proceeds back to block 40 to again process the file request. If the file cannot be obtained from the Voicemail apparatus 12 after a predetermined number of requests, the file server 16 can optionally inform the requester that the voicemail message is not available (not shown) as requested in the manner described hereinbefore for block 33 of FIG. 2.

When it is determined in block 42 that the identified file is presently stored in the file server 16, the sequence of steps proceeds via a "Yes" decision path from block 42 to a block 44. In a fourth step shown in block 44, the file server 16 retrieves the identified file and the sequence of steps proceeds from block 44 to a block 46. In a fifth step shown in block 46, the file server 16 determines both the destination for the retrieved file, and whether a cancellation of the file request was made since the time of the original file request in block 40. From the block 46, the sequence of steps proceeds to a block 48. In a sixth step shown in block 48, a determination is made of whether the destination determined in block 46 for the requested file is the electronic display device 18. If it is determined in block 48 that the file destination is the electronic display device 18, the sequence of steps proceeds via a "Yes" decision path from block 48 to a block 50 to direct the file to the electronic display device 18 and cause a display of the requested file. If it is determined that the file destination is not the electronic display device 18, the sequence of steps proceeds via a "No" decision path from block 48 to a block 52. In a seventh step shown in block 52, a determination is made of whether the determined destination in block 46 for the requested file is the printer 20. If it is determined in block 52 that the file destination is the printer 20, the sequence of steps proceeds via a "Yes" decision path from block 52 to a block 54 to direct the file to the printer and cause a printing of the requested file. If it is determined that the file destination determined in block 46 is not the printer 20, the sequence of steps proceeds via a "No" decision path from block 52 to a block 56.

In an eighth step shown in block 56, a determination is made of whether the destination determined in block 46 for the requested file is the facsimile machine 22. If it is determined in block 56 that the file destination is the facsimile machine 22, the sequence of steps proceeds via a "Yes" decision path from block 56 to a block 58 to direct the file to the facsimile machine and cause the requested file to be printed at the facsimile machine 22 or sent as a facsimile message to another destination. If it is determined that the file destination is not any one of the electronic display device 18, (block 48), the printer (block 52, or the facsimile machine (block 56) because of a finding of a cancellation of the file request in block 46, the sequence of steps proceeds via a "No" decision path from block 56 back to block 40 to process another file request. Similarly, once the file has been directed to the electronic display device 18, the printer 20, or the facsimile machine 22 in blocks 50, 54, and 58, respectively, the sequence of steps returns to block 40 to process another file request.

In accordance with the present invention, a technique is provided for recipients of voicemail messages to have a Voicemail system which permits recipients of the voicemail messages to obtain the voicemail messages in as voice and/or multiple different text outputs to facilitate communication and distribution of such received voicemail messages. More particularly, the present invention has the following advantages over the prior art Voice Mail Systems. First, the present voicemail messaging technique reduces man-hours required to transcribe the voicemail messages into displayed or printed form. Second, the present voicemail messaging technique is usable to both archive and to distribute voicemail messages more easily and widely through electronic display devices (E-Mail, and personal computer displays and files), printed hard copy, and/or facsimile machines. Third, the present voicemail messaging technique makes it easy to produce printed hard copy that can be signed for legal purposes. Fourth, the present voicemail messaging technique reduces the possibility of manual errors altering a transcription of the voicemail message. Fifth, the present voicemail messaging technique preserves confidentiality since a second party is not required to perform a transcription of the voicemail message.

It is to be understood that the Voicemail apparatus 12, the file server 16, the electronic display device 18, the printer 20, and the facsimile machine 22 are either located within or associated with a person's personal computer or workstation associated with a particular telephone number, or in a central location such as the public/private voice network 24 (e.g., a Private Branch Exchange) with the Voice-To-Text processing system 14. When the personal messaging system 10 is located at the public/private voice network 24, the person accesses the Voicemail messages by dialing into his/her telephone number and providing the correct voicemail message retrieval code and password. When the personal messaging system 10 is located within or associated with a personal computer or workstation, the facsimile machine 22 may be a facsimile card or a stand-apart facsimile machine, and the voicemail apparatus 12 and the file server 16 are hardware and software combinations. To obtain voicemail messages, the message recipient accesses the personal computer or workstation, either locally or via the public/private voice network 24, by dialing the telephone number of the personal computer or workstation. Upon providing the correct security code, the message recipient gains access to the voicemail messages stored in the Voicemail apparatus 12. By providing an appropriate feature access code and/or other information, the recipient directs a particular voicemail message to either one or all of the electronic display device 18, the printer 20, and the facsimile machine 22.

It is to be appreciated and understood that the specific embodiments of the invention described hereinbefore are merely illustrative of the general principles of the invention. Various modifications may be made by those skilled in the art consistent with the principles set forth hereinbefore. For example, the personal messaging system 10 can be arranged to automatically convert all voicemail messages received and stored by the Voicemail apparatus 12 for any designated mailbox into ASCII text messages which are stored in the file server 16 as shown in the flow diagram of FIG. 2. Still further, all voicemail messages stored in the file server 16 can be arranged to be automatically displayed at the electronic display device 18, printed at the printer 20, and/or processed by the facsimile machine 22 for a particular mailbox of the voicemail apparatus 12 as outlined in the flow diagram of FIG. 3.

## Claims

1. A method of producing a voicemail message stored in a voicemail apparatus and destined for a recipient at any of voice and multiple different text outputs comprising the steps of:
(a) signaling the voicemail apparatus with a predetermined feature access code for transmitting the voicemail message stored in the voicemail apparatus in a form of a digitized voice signal to a predetermined one of the multiple different text outputs:
(b) converting the digitized voice signal of the voicemail message for the predetermined one of the multiple different text outputs indicated by the predetermined feature access code in step (a) into an ASCII text output message signal; and
(c) transmitting the text output message signal from step (b) to the predetermined one of the multiple different text outputs associated with the predetermined feature access code provided in step (a).

2. The method of claim 1 wherein in performing step (b), converting the digitized voice message signal into the ASCII text output message signal using a voice-to-text processing system.

3. The method of claim 1 wherein in step (c), transmitting the text output message signal to at least one of a group consisting of an electronic display device, a hard copy printing device, and a facsimile device as determined from the predetermined feature access code provided in step (a).

4. The method of claim 3 wherein in performing step (c), transmitting the text output message signal to the electronic display device in a form of one of a group consisting of an E-mail message, a personal computer file, and a personal computer display.

5. The method of claim 1 wherein prior to performing step (c), performing a step of storing the ASCII text output message signal in a memory prior to transmitting the text output message signal in step (c).

6. The method of claim 1 wherein in performing step (a), initiating the performance of steps (a) to (c) by any one of a group consisting of the recipient of the voicemail message, another person, and a text output device coupled to the voicemail apparatus by transmitting the predetermined feature access code to the voicemail apparatus.

7. In the method of claim 1, automatically performing steps (a) to (c) for directing a voicemail message to a predetermined multiple different text output immediately upon the receipt of the voicemail message for a predetermined voicemail message recipient.

8. Voicemail apparatus comprising:
a voicemail message system for receiving and storing an input voicemail message signal in the form of a digitized voice message signal destined for a voicemail message recipient;
voice-to-text converting means for converting the digitized voice message signal stored in the voicemail message system into an ASCII text output message signal; and
memory means for storing the ASCII text output message signal produced by the voice-to-text converting means with other converted text output message signals, and for transmitting a stored ASCII text output message signal to a predetermined one of multiple different text reproducing devices in response to receipt of a predetermined separate feature access code associated with that predetermined one of the multiple different text reproducing devices.

9. The voicemail apparatus of claim 8 wherein the memory means transmits the text output message signal to at least one of a group of multiple different text reproducing devices consisting of an electronic display device, a hard copy printing device, and a facsimile device as determined from the predetermined feature access code.

10. The voicemail apparatus of claim 9 wherein the memory means transmits the text output message signal destined for the electronic display device in a form of one of a group consisting of an E-mail message, a personal computer file, and a personal computer display.

11. The voicemail apparatus of claim 8 wherein either one of a group consisting of the voicemail message system and the memory means is capable of initiating the transmission of a voicemail message to any one of a group of multiple text reproducing devices consisting of an electronic display device, a hard copy printing device, and a facsimile device by any one of a group consisting of the recipient of the voicemail message, another user of the voicemail apparatus, and any one of the group of multiple text reproducing devices providing the predetermined access code associated with that text reproducing device.

12. The voicemail apparatus of claim 8 wherein the voicemail apparatus is arranged to automatically cause the storage and transmission of a received voicemail message for a predetermined message recipient to a predetermined one of the multiple different text reproducing devices immediately upon the receipt of the voicemail message.

## Patentansprüche

1. Ein Verfahren zum Vorlegen einer in einer VM-Vorrich tung gespeicherten und für einen Empfänger bestimmten VM-Mitteilung an einem beliebigen von mehreren unterschiedliche n Sprach- oder Textausgabepun kten, wobei dieses Verfahren folgende Schritte umfasst:
(a) Senden eines vorbestimmten Funktions-Zugangscodes an die VM-Vorrichtung, um dieser damit zu signalisieren, dass die in der VM-Vorrichtu ng in Form eines digitalisier ten Sprachsignals gespeicherte VM-Mitteilung an einen vorbestimmten von mehreren unterschi edlichen Textausgabepun kten gese ndet werden soll.
(b) Umwandeln des digitalisierten Sprachsignals der VM-Mitteilung für den durch den in Schritt (a) vorbestimmten Funktions-Zugangscode bezeichneten vorbestimmten einen der mehreren unterschiedlichen Textausgabepunkte in ein ASCII-Textausgabe-Mi tteilungs signal.
(c) Senden des in Schritt (b) erzeugten Textausgabe-Mitteilungssig nals an den vorbestimmten einen der mehreren unterschiedlichen Textausgabepunkte, welcher dem in Schritt (a) vorgegeben en, vorbestimmten Funktions-Zug angscode zugeordnet ist.

2. Das Verfahren von Anspruch 1, wobei im Schritt (b) das Umwandeln des digitalisierten Sprachsignals in ein ASCII-Text ausgabe-Mitteilungssig nal unter Benutzung eines Sprache-nach -Textverarbeitungssystems erfolgt.

3. Das Verfahren von Anspruch 1, wobei im Schritt (c) das Textausgabe-Mitteilungssignal an mindestens ein Gerät einer Gruppe gesendet wird, welche aus einem elektronischen Anzeigegerät, einem eine Papierversion druckenden Gerät und einem Telefaxgerät besteht, wobei das Zielgerät durch den in Schritt (a) vorgegebenen, vorbestimmten Funktions-Zugangscode festgelegt wird.

4. Das Verfahren von Anspruch 3, wobei im Schritt (c) das Textausgabe-Mitteilungs signal an das elektronische Anzeigegerät in einer beliebigen der Formen E-Mail, PC-Datei und PC-Anzeige gesendet wird.

5. Das Verfahren von Anspruch 1, wobei vor dem Durchführen des Schritts (c) ein Schritt eingefügt wird, in dem das ASCII-Textausgabe-Mitteilungssignal vor dem in Schritt (c) erfolgenden Senden in einem Speicher abgelegt wird.

6. Das Verfahren von Anspruch 1, wobei im Schritt (a) das Starten der Durchführung der Schritte (a) bis (c) durch ein beliebiges Mitglied einer Gruppe, welche aus dem Empfänger der VM-Mitteilung, einer anderen Person und einem mit der VM-Vorrichtung verbundenen Textausgabe-Gerät besteht, dadurch erfolgt, dass der vorbestimmte Funktions-Zugangscode an die VM-Vorrichtung ge sendet wird.

7. Im Verfahren von Anspruch 1 ein automatisches Durchführen der Schritte (a) bis (c), um eine VM-Mitteilung zu mehreren vorbestimmten unterschiedlichen Textausgabepunkten zu leiten, und zwar unmittelbar nach Empfang der VM-Mitteilung für einen vorbestimmten VM-Mittei lungsempfänger.

8. Eine VM-Vorric htung, Folgendes umfassend:
- Ein VM-Mitteilungssystem zum Empfangen und Senden eines ankommenden, für einen VM-Mitteilungsempfänger bestimmten VM-Mitteilungs signals in Form eines digitalisierten Sprachmitteilu ngssignal s.
- Ein Sprache-nach-Text-Umwandlungsmittel zum Umwandeln des im VM-Mitteilungs system gespeicher ten digitali sierten Sprachmitteilu ngssignal s in ein ASCII-Text ausgabe-Mitteilungssig nal.
- Ein Speichermit tel zum Speichern des vom Sprache-nach-Text-Umwandlungsmit tel erzeugten ASCII-Textausgabe-Mitteilungssignals zusammen mit anderen umgewandelten Textausgabe-Mitteilungssignalen sowie zum Senden eines gespeicherten ASCII-Textausgabe-Mitteilungssignals an ein vorbestimmtes von mehreren unterschiedlichen Textwiedergabe-Geräten in Reaktion auf das Empfangen eines vorbestimmten speziellen Funktions-Zugangscodes, welcher diesem vorbestimmten einen der mehreren unterschiedlichen Textwiedergabe -Geräte zugeordnet ist.

9. Die VM-Vorrichtung von Anspruch 8, wobei das Speichermittel das Textausgabe-Mitteilungs signal an mindestens eines einer Gruppe von mehreren unterschiedlichen Textwiedergabe-Geräten sendet, welche aus einem elektronischen Anzeigegerät, einem Papierversionen druckenden Gerät und einem Telefaxgerät besteht, wobei das Zielgerät durch den vorbestimmten Funktions-Zugangscode fe stgelegt wird.

10. Die VM-Vorrichtung von Anspruch 9, wobei das Speichermittel das für das elektronische Anzeigegerät bestimmte Textausgabe-Mitteilungssignal in einer beliebigen der Formen E-Mail, PC-Datei und PC-Anzeige sendet.

11. Die VM-Vorrichtung von Anspruch 8, wobei entweder das VM-Mitteilungssystem oder das Speichermittel die Möglichkeit bietet, das Senden einer VM-Mitteilung an ein beliebiges einer Gruppe von mehreren Textwiedergabe-Geräten, welche aus einem elektronischen Anzeigegerät, einem eine Papierversion druckenden Gerät und einem Telefaxgerät besteht, durch ein beliebiges Mitglied einer Gruppe, welche aus dem Empfänger der VM-Mitteilung, einem anderen Nutzer der VM-Vorrichtung und einem beliebigen der mehreren Textwiedergabe-Geräte besteht, dadurch auslösen zu lassen, dass der vorbestimmte, dem betreffenden Textwiedergabe -Gerät zugeordnete Funktions-Zugang scode gesendet wird.

12. Die VM-Vorrichtung von Anspruch 8, wobei die VM-Vorrichtung so konzipiert ist, dass sie das Speichern einer empfangenen VM-Mitteilung für einen vorbestimmten Mitteilung sempfänger und deren Versenden an ein vorbestimmtes von mehreren vorbestimmten unterschiedlichen Textwiedergabe-Geräten bewirkt, und zwar unmittelbar nach Empfang der VM-Mitteilung.

## Revendications

1. Procédé de production d'un message d'audio-messagerie stocké dans un appareil d'audio-messagerie et destiné à un destinataire au niveau de l'un quelconque de dispositifs de sortie vocale et de multiples dispositifs de sortie texte différents, comprenant les étapes consistant à :
(a) envoyer un signal à l'appareil d'audio-messagerie à l'aide d'un code d'accès de caractéristique prédéterminé pour transmettre le message d'audio-messagerie stocké dans l'appareil d'audio-messagerie sous la forme d'un signal vocal numérisé à l'un prédéterminé des multiples dispositifs de sortie texte différents;
(b) convertir le signal vocal numérisé du message d'audio-messagerie pour l'un prédéterminé des multiples dispositifs de sortie texte différents indiqué par le code d'accès de caractéristique prédéterminé de l'étape (a) en un signal de message de sortie texte ASCII; et
(c) transmettre le signal de message de sortie texte de l'étape (b) à l'un prédéterminé des multiples dispositifs de sortie texte différents avec le code d'accès de caractéristique prédéterminé fourni à l'étape (a).

2. Procédé selon la revendication 1, dans lequel, lors de l'exécution de l'étape (b), celui-ci comprend la conversion du signal de message vocal numérisé en signal de message de sortie texte ASCII au moyen d'un système de traitement voix-vers-texte.

3. Procédé selon la revendication 1, dans lequel à l'étape (c), celui-ci comprend la transmission du signal de message de sortie texte à au moins un dispositif d'un groupe constitué d'un dispositif d'affichage électronique, d'un dispositif d'impression sur sortie papier et d'un dispositif de télécopie, déterminé à partir du code d'accès de caractéristique prédéterminé fourni à l'étape (a).

4. Procédé selon la revendication 3, dans lequel, lors de l'exécution de l'étape (c), celui-ci comprend la transmission du signal de message de sortie texte au dispositif d'affichage électronique sous une forme faisant partie d'un groupe constitué d'un message de courriel, d'un fichier d'ordinateur personnel et d'un affichage d'ordinateur personnel.

5. Procédé selon la revendication 1, dans lequel, avant l'exécution de l'étape (c), celui-ci comprend une étape consistant à stocker le signal de message de sortie texte ASCII dans une mémoire avant la transmission du signal de message de sortie texte de l'étape (c).

6. Procédé selon la revendication 1, dans lequel, lors de l'exécution de l'étape (a), celui-ci comprend l'initiation de l'exécution des étapes (a) à (c) par l'un quelconque d'un groupe constitué du destinataire du message d'audio-messagerie, d'une autre personne et d'un dispositif de sortie texte couplé à l'appareil d'audio-messagerie en transmettant le code d'accès de caractéristique prédéterminé à l'appareil d'audio-messagerie.

7. Procédé selon la revendication 1, comprenant l'exécution automatique des étapes (a) à (c) pour acheminer un message d'audio-messagerie vers un dispositif de sortie texte prédéterminé parmi de multiples dispositifs de sortie texte différents immédiatement à la réception du message d'audio-messagerie pour un destinataire de message d'audio-messagerie prédéterminé.

8. Appareil d'audio-messagerie comprenant :
un système d'audio-messagerie pour recevoir et stocker un signal de message d'audio-messagerie d'entrée sous la forme d'un signal de message vocal numérisé destiné à un destinataire de message d'audio-messagerie;
un moyen de conversion voix-vers-texte pour convertir le signal de message vocal numérisé stocké dans le système d'audio-messagerie en un signal de message de sortie texte ASCII; et
un moyen formant mémoire pour stocker le signal de message de sortie texte ASCII produit par le moyen de conversion voix-vers-texte avec d'autres signaux de messages de sortie texte convertis, et pour envoyer un signal de message de sortie texte ASCII stocké à l'un prédéterminé parmi de multiples dispositifs de reproduction alphabétique différents en réponse à la réception d'un code d'accès de caractéristique distinct prédéterminé associé à celui prédéterminé des multiples dispositifs de reproduction alphabétique différents.

9. Appareil d'audio-messagerie selon la revendication 8, dans lequel le moyen formant mémoire envoie le signal de message de sortie texte à au moins l'un d'un groupe de multiples dispositifs de reproduction alphabétique différents comprenant un dispositif d'affichage électronique, un dispositif d'impression sur sortie papier et un télécopieur, déterminé à partir du code d'accès de caractéristique prédéterminé.

10. Appareil d'audio-messagerie selon la revendication 9, dans lequel le moyen formant mémoire envoie le signal de message de sortie texte destiné au dispositif d'affichage électronique sous une forme parmi l'une d'un groupe constitué d'un message de courriel, d'un fichier pour ordinateur personnel et d'un affichage d'ordinateur personnel.

11. Appareil d'audio-messagerie selon la revendication 8, dans lequel l'un ou l'autre d'un groupe constitué du système d'audio-messagerie et du moyen formant mémoire est capable d'initier la transmission d'un message d'audio-messagerie à l'un quelconque d'un groupe de multiples dispositifs de reproduction alphabétique constitués d'un dispositif d'affichage électronique, d'un dispositif d'impression sur copie papier et d'un dispositif de télécopie, par l'un quelconque d'un groupe constitué du destinataire de message d'audio-messagerie, d'un autre utilisateur de l'appareil d'audio-messagerie et l'un quelconque du groupe des multiples dispositifs de reproduction alphabétique fournissant le code d'accès prédéterminé associé à ce dispositif de reproduction alphabétique.

12. Appareil d'audio-messagerie selon la revendication 8, dans lequel l'appareil d'audio-messagerie est configuré pour provoquer automatiquement le stockage et la transmission d'un message d'audio-messagerie reçu pour un destinataire de message prédéterminé à l'un prédéterminé des multiples dispositifs de reproduction alphabétique différents, immédiatement à la réception du message d'audio-messagerie.
